# EUROPÄISCHE PATENTSCHRIFT

(11) **EP 0 766 486 B1**
(45) Veröffentlichungstag und Bekanntmachung des Hinweises auf die Patenterteilung: **02.11.2006**
(21) Anmeldenummer: 96114848.3
(22) Anmeldetag: 16.09.1996
(51) Int. Cl.: H04Q 3/545

(54) **Verfahren zum Speichern einer länderspezifischen Datenkonfiguration in einem Kommunikationssystem**
Method for storing a country-specific data-configuration in a communication system
Procédé pour le stockage d'une configuration de données spécifiques pour les pays dans un système de communication

(30) Priorität: 27.09.1995 DE 19535957
(43) Veröffentlichungstag der Anmeldung: 02.04.1997
(73) Patentinhaber: SIEMENS AKTIENGESELLSCHAFT, 80333 München (DE)
(72) Erfinder: Abel, Ulrich, 45329 Essen (DE); Böttger, Detlev, 58239 Schwerte (DE); Dziennus, Norbert, 44227 Dortmund (DE); Roth, Roland, 45884 Gelsenkirchen (DE); Müller-Gesser, Hans-Dieter, 81379 München (DE)

(56) Entgegenhaltungen:
- EP-A- 0 459 279
- EP-A- 0 489 214
- EP-A- 0 557 681
- PATENT ABSTRACTS OF JAPAN vol. 016, no. 546 (E-1291), 16. November 1992 (1992-11-16) & JP 04 207549 A (KONICA CORP), 29. Juli 1992 (1992-07-29)

## Beschreibung

Die Erfindung bezieht sich auf ein Verfahren zur Festlegung einer länderspezifischen Datenkonfiguration in einer Speichereinheit, deren Inhalt durch die Systemsteuerung eines programmgesteuerten, vorzugsweise privaten Kommunikationssystems zur Ausführung von tabellengesteuerten Abläufen als Steuerparameter herangezogen wird und wobei das Kommunikationssystem zur wahlweisen Vermittlung von Verbindungen zwischen internen Endgeräten und mit an öffentliche Netze angeschlossenen externen Endgeräten aufgrund einer entsprechenden Wahlprozedur dient.

Modern konzipierte programmgesteuerte Kommunikationsanlagen enthalten eine Systemsteuerung, die ein Rechnersystem aufweist - siehe hierzu auch EP-A-0 557 681. Dieses Rechnersystem beinhaltet einen oder mehrere Prozessoren und eine oder mehrere Speichereinheiten. Die Speichereinheit enthält mindestens einen Programmspeicher, in dem u.a. das Betriebsprogramm und die Systemdatenbasis enthalten sind. Diese Daten und Programme sind in Festwertspeicherbausteinen enthalten, die als sogenannte PROM-Bausteine ausgebildet sind. Außerdem enthält die Speichereinheit einen nach dem RAM-Speicherprinzip ausgebildeten Speicherteil, in dem u.a. die einer Kommunikationsanlage zugeordneten Kundendaten abgespeichert sind und der auch als Arbeitsspeicher dient. In Abhängigkeit von den nationalen Vorschriften des jeweiligen Landes, in dem das Kommunikationssystem zum Einsatz kommt, sind unterschiedliche Daten- bzw. Programmkonfigurationen notwendig. Diese werden als Ländervarianten bezeichnet. Es besteht nun grundsätzlich die Möglichkeit, nur die aktuelle Ländervariante durch die ihr entsprechend zugehörigen Programmteile in das Kommunikationssystem einzubringen. Eine andere Möglichkeit besteht darin, für alle möglichen Ländervarianten die betreffenden Informationen abzuspeichern und für die Variante des jeweiligen Einsatzlandes die entsprechende Auswahl zu treffen. Dies erfolgt in der Regel durch die z.B. von einem Servicetechniker vorgenommene Eingabe bestimmter betriebstechnischer Aufträge. Neben dem hierzu notwendigen zeitlichen Aufwand besteht auch die Gefahr von Fehleinstellungen.

Es ist die Aufgabe der Erfindung, ein Verfahren anzugeben, durch das eine einfache, sichere und zeitsparende Einstellung auf die Erfordernisse der einzelnen Einsatzländer ermöglicht wird.

Erfindungsgemäß wird diese Aufgabe bei dem Verfahren der eingangs genannten Art durch die in den Patentansprüchen angegebenen Merkmale gelöst.

Das wesentliche der Erfindung liegt darin, daß als Folge einer nach der erstmaligen Inbetriebnahme des Kommunikationssystems im Einsatzland vorgenommene Wahlprozedur ein signifikantes Landeskriterium entsteht. Daraus wird dann vollautomatisch eine entsprechende Landeskennung gebildet. Aufgrund dieser Landeskennung wird eine Tabelle mit den landesspezifischen Parametern ausgewählt bzw. erstellt, die dann für den weiteren Betrieb des Kommunikationssystems maßgebend ist. In dieser Tabelle sind dann z.B. die Forderungen hinsichtlich der Aktivierung bestimmter Leistungsmerkmale, hinsichtlich der Charakteristik der Hörtöne und Rufe und hinsichtlich der Zeitbedingungen und der Sprachfassung der Displaytexte enthalten. Es werden also aufgrund einer Wahlprozedur ohne irgendwelche zusätzlichen betriebstechnischen Eingaben die länderspezifischen "Muß"- und "Markt"-Daten gesetzt. Eine besonders einfache Methode zur Erzeugung der jeweiligen Landeskennung kann dadurch erreicht werden, daß völlig selbsttätig nach der Inbetriebnahme des Kommunikationssystems bestimmte, in einer Tabelle abgelegte Ziffernfolgen nacheinander ausgewählt werden. Diese Ziffernfolgen bestehen aus einer den Einstieg in die Fernebene ermöglichende Belegungskennzahl und aus einer sich daran anschließenden Landeskennzahl, die der vorgeordneten Belegungskennzahl zuzuordnen ist. Es wird hierbei die Tatsache ausgenutzt, daß das System eine Belegung eines internationalen Verbindungsweges dann nicht zuläßt, wenn dies über die landeseigene Belegungs- und Landeskennzahl erfolgt. In einem solchen Fall wird eine Auslösung vorgenommen. Dies ist unabhängig von der Art des Kommunikationssystems, d.h. dies gilt in gleicher Weise für ein analoges System und ein digitales System. Im ersteren Fall erfolgt die Abgabe eines auszuwertenden Besetzttones und beim digitalen System wird eine entsprechende Auslösemeldung generiert. Nachdem bei diesem Testablauf automatisch erkannt wird, in welchem Land das Kommunikationssystem installiert ist, wird dann aufgrund der daraus ermittelten Länderkennung die landesspezifische Steuerungstabelle, die - wie bereits erwähnt - die Anpassungen an die Zulassungsvorschriften enthält, bestimmt.

Das signifikante Landeskriterium ist in einer Weiterbildung der Erfindung auch aus Informationen abzuleiten, die von der öffentlichen Vermittlungsstelle bei einem ersten beliebigen externen Gespräch dem Kommunikationssystem übermittelt werden. Es können hierzu erfindungsgemäß bestimmte Protokollelemente der zwischen dem öffentlichen Vermittlungssystem und dem Kommunikationssystem ausgetauschten Protokolle herangezogen werden. Dies setzt dann die Anwendungen von unterscheidungsfähigen Protokollen voraus. Eine Möglichkeit, ein signifikantes Landeskriterium festzustellen, liegt beispielsweise in der Bewertung der gebührenbezogenen Informationen. In der Gesprächsdatenerfassung gibt es Hinweise auf das jeweilige Einsatzland. Eine Unterscheidungsmöglichkeit bietet z.B. der in den Meldungen enthaltene Hinweis auf den jeweiligen Währungsbetrag. Signifikante Kennungsmöglichkeiten für das jeweilige Einsatzland bieten auch die beim Aufbau einer Gesprächsverbindung abgegebenen Meldungen zur Steuerung des Displays.

Zur Erstellung der länderspezifischen Steuerparameter für die aktuelle Tabelle kann von einer standardisierten Tabelle ausgegangen werden. Diese Liste bzw. Tabelle enthält die für ein bestimmtes Land als Standardsteuerparameter vorgesehenen Einträge. Für die weiteren Länder sind dann in den Speicherbereichen nur noch diejenigen Steuerparameter eingespeichert, die von diesen Standardeinträgen abweichen. Die z.B. bei der Initialisierung des Kommunikationssystems übernommenen Standardparameter werden dann nach dem Erkennen des jeweiligen Einsatzlandes aufgrund der für dieses Land vorhandenen Zusatztabelle entsprechend korrigiert. Da auf diese Weise keine kompletten Tabellen für jedes Land abzuspeichern sind, wird Speicherkapazität eingespart.

Die Erfindung wird im folgenden anhand eines figürlich dargestellten Ausführungsbeispiels erläutert.

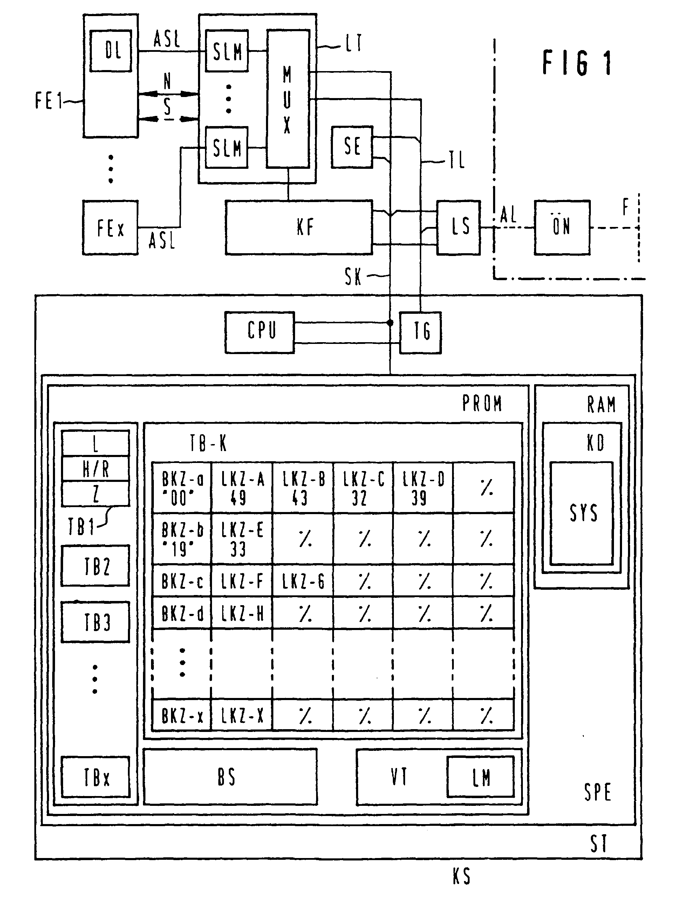

In der FIG 1 ist die Struktur eines digitalen Kommunikationssystems schematisch dargestellt. Es sind lediglich die zum Verständnis der Erfindung notwendigen Komponenten gezeigt.

Die FIG 2 zeigt das Flußdiagramm zur automatischen Feststellung des Landes, in dem das Kommunikationssystem eingesetzt ist.

Zentraler Bestandteil des Kommunikationssystems KS, das ein sogenanntes Nebenstellen-Kommunikationssystem darstellt, ist ein zentrales Koppelfeld KF, über das Endgeräte, von denen lediglich die Fernsprechendgeräte FE1 und FEx schematisch angedeutet sind, miteinander bzw. mit zu einem öffentlichen Kommunikationssystem ÖN führenden Leitungen AL verbindbar sind. Das zentrale Koppelfeld KF steht unter dem Steuereinfluß einer zentralen Systemsteuerung ST, die neben dem Zentralprozessor CPU eine Speichereinrichtung SPE und eine Takteinheit TG enthält. Der Zentraleprozessor steuert sämtliche Vermittlungsvorgänge und besorgt eine Aufbereitung und Zuteilung der Steuerdaten. Diese Aufgaben können auch auf mehrere Prozessoren aufgeteilt werden. Im Kommunikationssystem KS sind Leitungsanschlußeinrichtungen, symbolisiert durch die Leitungsanschlußeinrichtung LT, angeordnet. Diese enthalten jeweils Teilnehmeranschlußmodule SLM. Diese Teilnehmeranschlußmodule sind über Teilnehmeranschlußleitungen ASL jeweils mit einem der Kommunikationsendgeräte FE...FEx verbunden, wobei grundsätzlich unterschiedliche Teilnehmeranschlußmodule vorgesehen sein können. Dies sind zum einen Teilnehmeranschlußmodule für den Anschluß analoger Kommunikationsendgeräte und zum anderen Teilnehmeranschlußmodule für den Anschluß unterschiedlich strukturierter digitaler Kommunikationsendgeräte. Die Nachrichtenübertragung erfolgt hierbei z.B. über Nachrichtenkanäle N und die Signalisierung wird über einen zusätzlichen Kanal S übermittelt. Die vom Kommunikationsendgerät, z.B. FE, übermittelten digitalen Sprachinformationen werden ebenfalls über eine Multiplex-Einrichtung MUX zum Koppelfeld KF weitergegeben. Vermittlungstechnisch gesteuert werden die Leitungsanschlußeinrichtungen LT von der Systemsteuerung ST. Es ist dabei jede Leitungsanschlußeinrichtung über einen Signalisierungskanal SK mit der Systemsteuerung ST verbunden. Über diesen Signalisierungskanal SK werden die Informationen mit Hilfe der bekannten HDLC-Übermittlungsprozedur ausgetauscht. Die in der Systemsteuerung gebildeten Taktsignale werden über eine Taktleitung TL an die Leitungsanschlußeinrichtungen LT verteilt. Die Taktsignale werden durch die Einheit TG zur Verfügung gestellt.

Der Zugriff zu einer Amtsleitung AL und damit auch der Einstieg in die Fernebene erfolgt über die Schnittstelle LS. Diese Schnittstelle beinhaltet beispielsweise einen ISDN-Teil, der z.B. als standardisierte SO-Schnittstelle ausgebildet sein kann. Die Peripherie des Kommunikationssystems wird ergänzt durch eine Signalisierungseinheit SE, die zur Zeichenversorgung des Kommunikationssystems vorhanden ist. Sie kann einen Hörtonerzeuger enthalten, der Hörtöne unterschiedlicher Frequenz liefert. Weiterhin enthält diese Einheit üblicherweise einen MFV-Sender, der die erforderlichen Signale bei einer Mehrfrequenzwahl in einem entsprechenden Netz erzeugt.

Der Zentralprozessor CPU der Systemsteuerung ST hat Zugriff zu den in der Speichereinrichtung SPE abgelegten Programmen bzw. Daten. Der Prozessor und die Speichereinheit sind miteinander über einen nicht weiter dargestellten Datenbus, einen Adreßbus und einen Steuerbus verbunden. Die Speichereinheit SPE enthält Halbleiterspeicherbausteine unterschiedlichen Speichertyps. In dem Speicherteil PROM ist das Anlagenbetriebsprogramm und die zu ihm bezüglich der Peripherietechnik, der Betriebstechnik, der Sicherheitstechnik und der Vermittlungstechnik gehörenden Programme abgespeichert. Dies ist bezüglich der Vermittlungstechnik durch das Modul VT angedeutet. Mit LM ist ein Modul bezeichnet, das symbolisch für die zur Realisierung der einzelnen Leistungsmerkmale vorhandenen Programmodule steht. Neben dem Betriebssystem BS sind als Teil der Systemdatenbasis Tabellen TB1...TBx abgespeichert. In diesen Tabellen bzw. Listen sind diejenigen Informationen abgespeichert, die für den Betrieb des Kommunikationssystems in dem jeweiligen Land als entsprechende Zulassungsvorschriften notwendig sind. Es sind also länderspezifische Daten abgespeichert, die beispielsweise Dämpfungspläne, Wegeeinstellungen, gegebenenfalls bestimmte Baugruppeneinstellungen, Daten zur speziellen Gebührenerfassung, die Erlaubnis der Aktivierung bestimmter Leistungsmerkmale, die Charakteristik der Hörtöne und Rufe sowie Zeitbedingungen betreffen. Das Kommunikationssystem ist also mit unterschiedlichen Konfigurationen, die im allgemeinen als Ländervarianten bezeichnet werden und die in Abhängigkeit von den nationalen Vorschriften des jeweiligen Landes festgelegt werden, versehen. Jede Tabelle TB besteht wiederum aus einzelnen Teiltabellen, von denen für die Tabelle TB1 lediglich die Teiltabellen L, H/R und Z symbolisch angedeutet sind. In der Tabelle L ist festgelegt, ob die Erlaubnis für die Aktivierung bestimmter Leistungsmerkmale besteht. Ein Beispiel hierfür wäre die Möglichkeit einer Extern/Extern- oder einer Extern/Intern-Konferenz oder die Möglichkeit der Inanspruchnahme eines hinsichtlich der Kosten minimalisierten Verbindungsweges. Dieses Leistungsmerkmal ist unter dem Begriff "least cost routing" bekannt. In der Teiltabelle H/R ist die Charakteristik der Hörtöne und der Rufe niedergelegt. Es sind also darin die für jedes Land charakteristischen Frequenzen, die Pegel und die Tonkadenzen enthalten. Bezüglich der Rufe sind die z.B. hinsichtlich eines Internrufes und eines eintreffenden externen Rufes unterschiedlichen Ruffrequenzen und/oder die Taktung festgelegt. In der Teiltabelle Z sind die Zeitbedingungen enthalten. Hierzu gehören beispielsweise die minimale und die maximale Flashzeit, die minimale Auslöseerkennungszeit und beispielsweise die Wiederbelegungssperrzeiten. Um die notwendige Speicherkapazität zu verringern, sind nun nicht für jedes Land die vollständigen Tabellen TB abgespeichert. Dies erfolgt nur für ein bestimmtes Land, für das alle für dieses Land hinsichtlich der Zulassungsvorschriften zu erfüllende Notwendigkeiten enthalten sind. Diese Basistabelle kann beispielsweise als Tabelle TB1 für den Einsatz in der Bundesrepublik Deutschland vorgesehen sein.

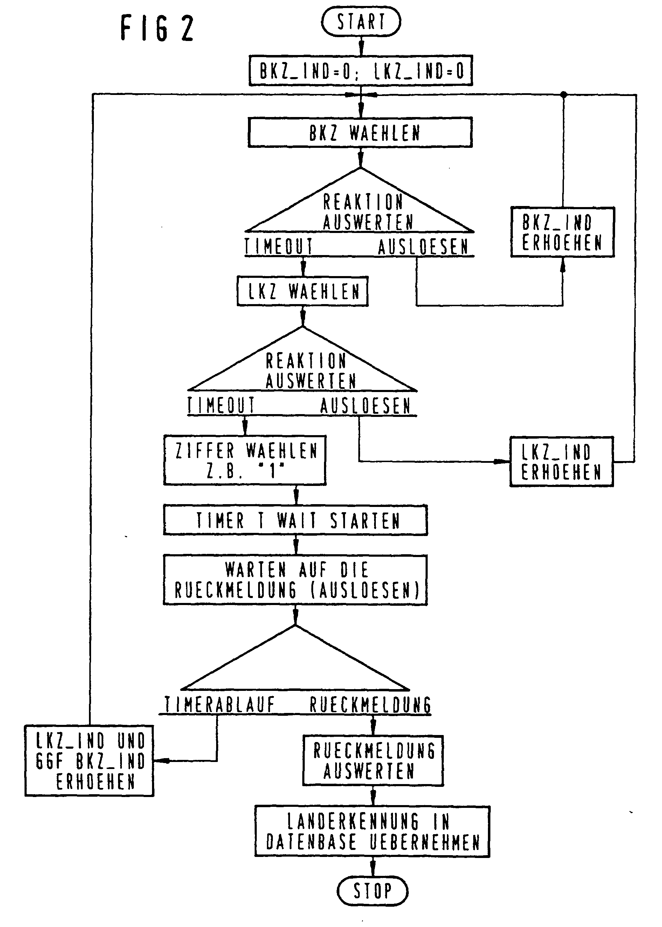

In den Tabellen TB2...TBx für die übrigen möglichen Einsatzländer des Kommunikationssystems sind dann lediglich diejenigen Informationen einzugeben, die von den entsprechenden Inhalten dieser Basistabelle abweichen. Um nun aus der Basistabelle und den jeweiligen Ländertabellen, in denen sich also - wie bereits erwähnt - aus Speicherplatzgründen nur diejenigen länderspezifischen Daten befinden, die zu diesen in der Basistabelle enthaltenen Daten unterschiedlich sind, die aktuelle Steuertabelle zu erstellen, muß also vorab die Tabelle des betreffenden Einsatzlandes ausgewählt werden. Um für diese Auswahl keine manuellen Eingaben, z.B. über ein betriebstechnisches Terminal, vornehmen zu müssen, erfolgt erfindungsgemäß eine vollautomatische Erkennung des jeweiligen Einsatzlandes. Um diesen Automatismus zu ermöglichen, ist eine Tabelle zur Generierung bestimmter Rufnummern abgespeichert. Diese, in einer Matrixform aufgebaute Tabelle TB-K enthält Belegungskennziffern und die solchen Belegungskennziffern zuzuordnenden Landeskennziffern, die also der bekannten Landesvorwahl für die einzelnen Länder entsprechen. Die einzelnen Belegungskennziffern BKZ-a...BKZ-x sind diejenigen Kennzahlen, mit denen aus einem bestimmten Land der Einstieg in die internationale Verbindungsebene, d.h. also die Fernebene F, möglich ist. Steht z.B. BKZ-a für die Bundesrepublik Deutschland, so ist dies die Kennzahl "00". Diese Kennzahl gilt in gleicher Weise z.B. für die Länder Österreich, Belgien oder Italien. Diese genannten Länder sind durch die Landeskennzahlen LKZ-B...LKZ-D symbolisiert. Für andere Länder sind abweichende BKZ-Kennzahlen als Belegungskennziffern der Fernebene vorgegeben. Diejenigen Länder, für die diese Belegungskennziffer zutreffend ist, sind dann in der betreffenden Zeile der Tabelle eingetragen. Der Belegungskennziffer BKZ-x soll dann die Landeskennziffer LKZ-X zugeordnet sein. Es werden nun vollautomatisch die einzelnen Belegungskennziffern und die ihnen zugeordneten Landeskennziffern sowie eine weitere beliebige Ziffer, beispielsweise die Ziffer 1, nacheinander ausgewählt. Nach Beendigung eines Verbindungsaufbauversuches wird für den nächsten Durchlauf der LKZ-Index erhöht. Wird das Ende der jeweiligen Zeile der Tabelle erreicht, so wird der LKZ-Index auf Null gesetzt und der BKZ-Index erhöht. Es wird also auf den externen Leitungen quasi ein Testablauf gestartet. Die Beschreibung dieses Testablaufes ist dem Flußdiagramm der FIG 2 zu entnehmen. Grundsätzlich werden die in der Tabelle TB-K enthaltenen Ziffernfolgen nacheinander ausgewählt. Dies erfolgt solange, bis nach der vollständigen Auswahl der Belegungskennziffer der Landeskennzahl und einer nachfolgenden Ziffer als Rückinformation die Auslösemeldung eintrifft. Dies ist nämlich immer dann der Fall, wenn der Versuch unternommen wird, über die Fernebene eine Verbindung in das eigene Land aufzubauen. Das bedeutet demnach, daß auf diese Weise ein signifikantes Kriterium für das betreffende Land, in dem die Anlage installiert ist, zur Verfügung steht. Dieser Rückweg in das eigene Land wird insgesamt durch die Auswahl der BKZ- und der LKZ-Kennzahl und einer automatisch zusätzlich noch ausgewählten weiteren Ziffer, beispielsweise die Ziffer 1, definiert. Werden also aus der Tabelle TB-K die dem jeweiligen Einsatzland definitionsgemäß zuzuordnenden Kennzahlen ausgewählt, so wird damit die Auslösereaktion provoziert. Es kann ein derartiges Auslösen auch nach der Auswahl der BKZ-Kennzahl oder auch bereits nach der Auswahl der LKZ-Kennzahl erfolgen. Wird ein derartiges Auslösen festgestellt, so ist entweder der BKZ-Index bzw. der LKZ-Index zu erhöhen. Aufgrund dieser zwischenzeitlichen Prüfschritte wird nämlich dadurch erkannt, daß die betreffenden Kennzahlen für das jeweilige Fernsprechnetz eine "ungültige" Wahl darstellt.

Nach der erfolgreichen Auswahl der gesamten, aus Belegungskennzahl, Landeskennzahl und einer nachfolgenden Ziffer bestehenden Ziffernkombination wird ein Timer gestartet. Wurde eine Ziffernkombination ausgewählt, die nicht das jeweilige Einsatzland betrifft, so wird nach Ablauf der damit vorgegebenen Wartezeit die in der Tabelle nachfolgende Ziffernkombination ausgewählt. Erfolgt jedoch innerhalb der Wartezeit eine Rückinformation in Form der Auslösemeldung, so wird durch die entsprechende Auswertung dadurch das betreffende Einsatzland erkannt. Dies führt zur Bildung einer entsprechenden Landeskennung, die dann z.B. in der Datenbasis abgelegt wird. Wird z.B. aufgrund des automatischen Testablaufes nach der Auswahl der Ziffernfolge "19-331" das Land Frankreich erkannt, so sind dann die z.B. in der Tabelle TB3 für dieses Land eingespeicherten Informationen maßgebend. Diese Daten werden dann in den Speicherbereich SYS des Kundendatenspeichers KD übernommen. Dieser Speicherbereich KD ist als Teileinheit der Datenbasis im Speicherteil RAM angedeutet. Der Speicherteil RAM dient u.a. der Aufnahme von temporären Daten zur Programmablaufsteuerung. Es werden in ihm auch Daten übernommen, die während eines durch ein Kommunikationsendgerät initiierten Verbindungsaufbaus oder bei der Inanspruchnahme eines Dienstes bzw. eines Leistungsmerkmals abgefragt werden. Im Speicherbereich KD sind die Kundendaten, wie z.B. die den einzelnen Endgeräten FE zugeteilten Berechtigungen und die Systemkonfiguration abgelegt. In dem Teilbereich SYS werden die systembezogenen Daten übernommen.

Für das Ausführungsbeispiel wird davon ausgegangen, daß in der Tabelle TB3 lediglich die gegenüber der Basistabelle BT1 vorhandenen Unterschiede abgespeichert sind. Diese Unterschiede betreffen beispielsweise die Sprache und das Währungskennzeichen, das von DM in FF zu ändern ist. Weiterhin sind darin die sich unterscheidenden Kadenzen von Hörtönen und von Ruftönen enthalten. Dies trifft auch auf die verwendeten Frequenzen zu. Beispielsweise wird anstelle eines reinen Sinus-Tones ein Schwebungston als Hörzeichen verwendet. Weiterhin sind dann die unterschiedlichen Zeitkriterien darin abgespeichert. Diese, in der Tabelle TB3 abgespeicherten Unterschiede dienen dann zur Korrektur der Basistabelle. Diese ist beispielsweise mit der ursprünglichen Inbetriebnahme in den Speicherbereich SYS kopiert worden. Ihre Einträge werden im Sinne der in der Tabelle TB3 enthaltenen Abweichungen korrigiert. Für die übrigen Einsatzländer gilt dann mit dem Erkennen des aktuellen Landes entsprechendes. Die jeweilige Korrektur erfolgt durch den Aufruf eines entsprechenden Programmes.

Um zu vermeiden, daß der Inhalt des Speichers KD bei einem Spannungsausfall verloren geht, wird entweder ein batteriegepufferter RAM-Speicherbaustein oder ein sogenannter EE-Speicherbaustein verwendet. Der Inhalt eines solchen nichtflüchtigen Speichers überdauert einen Ausfall der Versorgungsspannung. Nach der erfindungsgemäßen Festlegung der länderspezifischen Daten aufgrund der ermittelten Landeskennung, die der Betriebstechnik übergeben wird, erfolgt die Initialisierung des Kundendatenspeichers.

## Patentansprüche

1. Verfahren zur Festlegung einer länderspezifischen Datenkonfiguration in einer Speichereinheit, deren Inhalt durch die Systemsteuerung eines programmgesteuerten, vorzugsweise privaten Kommunikationssystems (KS) zur Ausführung von tabellengesteuerten Abläufen als Steuerparameter herangezogen wird und wobei das Kommunikationssystem zur wahlweisen Vermittlung von Verbindungen zwischen internen Endgeräten und mit an öffentliche Netze angeschlossenen externen Endgeräten aufgrund einer Wahlprozedur dient,
**dadurch gekennzeichnet,**
**daß** aus der Bewertung eines als Folge einer nach der erstmaligen Inbetriebnahme des Kommunikationssystems im Einsatzland vorgenommenen Wahlprozedur entstehenden signifikanten Landeskriteriums eine entsprechende Landeskennung gebildet wird und daß für die vorgesehenen unterschiedlichen Einsatzländer selektiv Tabellen abgespeichert sind, die die länderspezifischen Steuerparameter in Form der Kunden- und nationalen Forderungsdaten enthalten und daß aufgrund der ermittelten Landeskennung die aktuelle Tabelle bereitgestellt und als maßgebend für den Betrieb des Kommunikationssystems in dem festgestellten Einsatzland herangezogen wird.

2. Verfahren nach Anspruch 1,
**dadurch gekennzeichnet,**
**daß** zur automatischen Durchführung der Wahlprozedur eine Tabelle (TB-K) abgespeichert ist, die für unterschiedliche Länder die eine internationale Verbindungsmöglichkeit zulassende Belegungskennzahl (BKZ-a...BKZ-x) und die einer solchen Belegungskennzahl jeweils zuzuordnende Landeskennzahl (LKZ-A... LKZ-X) enthält, daß die einzelnen Kennzahlkombinationen zuzüglich einer weiteren Ziffer solange nacheinander automatisch ausgewählt werden, bis bei der Wahl der das Einsatzland repräsentierenden Kennzahlkombination die als signifikantes Landeskriterium gewertete Auslösung der Belegung erfolgt und somit das Einsatzland bestimmt und die entsprechende Landeskennung erzeugbar ist.

3. Verfahren nach Anspruch 2,
**dadurch gekennzeichnet,**
**daß** als Adressierungsdaten für die einzelnen Tabellenplätze der abgespeicherten Tabelle die zugeordneten Kennzahlkombinationen jeweils herangezogen werden.

4. Verfahren nach Anspruch 1,
**dadurch gekennzeichnet,**
**daß** das signifikante Landeskriterium aus den als Folge einer ersten beliebigen externen Gesprächsverbindung von der öffentlichen Vermittlungsstelle übermittelten Informationen abgeleitet wird und zur Bildung der Landeskennung dient.

5. Verfahren nach Anspruch 4,
**dadurch gekennzeichnet,**
**daß** als eine entsprechend auswertbare übermittelte Information landesspezifische Elemente der zwischen dem Kommunikationssystem und dem öffentlichen Vermittlungssystem ausgetauschten Protokolle dienen.

6. Verfahren nach Anspruch 4 oder 5,
**dadurch gekennzeichnet,**
**daß** gebührenbezogene Informationen als signifikantes Landeskriterium gewertet werden und zur Bildung der Landeskennung herangezogen werden.

7. Verfahren nach Anspruch 4 oder 5,
**dadurch gekennzeichnet,**
**daß** als ein signifikantes Landeskriterium die im Zusammenhang mit der Displayanzeige (DL) übermittelten landesspezifischen Meldungen dienen und zur Bildung der Landeskennung herangezogen werden.

8. Verfahren nach Anspruch 1,
**dadurch gekennzeichnet,**
**daß** die aktuelle Tabelle der länderspezifischen Steuerparameter aus einer standardisierte Informationen enthaltenden Tabelle (TB1) und aus einer für jedes Einsatzland vorgesehenen und jeweils lediglich die gegenüber der Standardtabelle enthaltenden Änderungstabelle (TB2...TBx) mit Hilfe eines entsprechenden Programms durch die Systemsteuerung erstellt wird.

9. Verfahren nach Anspruch 8,
**dadurch gekennzeichnet,**
**daß** die die standardisierten Informationen enthaltende Tabelle diejenige Tabelle ist, die für ein bestimmtes Land die maßgebenden Steuerparameter enthält.

## Claims

1. Method for defining a country-specific data configuration in a memory unit, the contents of which are used by the system controller of a program-controlled, preferably private, communication system (KS) to carry out table-controlled processes as control parameters, and whereby the communication system is used for switching connections as required between internal terminals and to external terminals connected to public networks on the basis of a dialling procedure,
**characterized in that**,
from the evaluation of a significant criterion produced as a result of a dialling procedure carried out following the initial commissioning of the communication system, a corresponding country identifier is formed and tables containing the country-specific control parameters in the form of customer and national requirement data are stored selectively for the proposed different countries of use, and the current table is provided on the basis of the determined country identifier and is used to determine the operation of the communication system in the specified country of use.

2. Method according to Claim 1,
**characterized in that**,
for the automatic performance of the dialling procedure, a table (TB-K) is stored which contains the seizure code (BKZ-a...BKZ-x) permitting an international connection facility for different countries and the country code (LKZ-A...LKZ-X) which is to be allocated in each case to a seizure code of this type, the individual code combinations plus an additional digit are dialled automatically in succession until, in dialling the code combination representing the country of use, the release of the seizure evaluated as a significant country criterion is carried out and the country of use is thus identified and the corresponding country code can be generated.

3. Method according to Claim 2,
**characterized in that**
the allocated code combinations are used in each case as addressing data for the individual table spaces of the stored table.

4. Method according to Claim 1,
**characterized in that** the significant country criterion is derived from the information transferred by the public exchange as a consequence of any given first external call connection, and is used to form the country identifier.

5. Method according to Claim 4,
**characterized in that**
country-specific elements of the protocols exchanged between the communication system and the public switching system are used as transferred information which can be evaluated accordingly.

6. Method according to Claim 4 or 5,
**characterized in that** charge-related information is evaluated as a significant country criterion and is used to form the country identifier.

7. Method according to Claim 4 or 5,
**characterized in that**
the country-specific messages transferred in connection with the display presentation (DL) serve as a significant country criterion and are used to form the country code.

8. Method according to Claim 1,
**characterized in that** the current table of the country-specific control parameters is created by the system controller with the aid of a corresponding program from a table (TB1) containing standardized information and from a change table (TB2...TBx) provided for each country of use and in each case containing only the differences compared with the default table.

9. Method according to Claim 8,
**characterized in that**
the table containing the standardized information is the table which contains the determining control parameters for a specific country.

## Revendications

1. Procédé pour spécifier une configuration de données, spécifique à un pays, dans une unité de mémoire dont le contenu est exploité comme paramètres de commande par la commande d'un système de communication (KS), commandé par programme et privé de préférence, en vue de la réalisation d'opérations commandées par tableau, le système de communication servant à la commutation optionnelle de communications entre des terminaux internes et avec des terminaux externes raccordés à des réseaux publics sur la base d'une procédure de numérotation,
**caractérisé par le fait que**, à partir de l'évaluation d'un critère de pays significatif issu d'une procédure de numérotation effectuée dans le pays d'installation après la première mise en service du système de communication, on forme un identificateur de pays correspondant, que des tableaux sont mémorisés sélectivement pour les différents pays d'installation prévus, lesquels tableaux contiennent les paramètres de commande spécifiques aux pays sous la forme de données d'exigences de client ou nationales, et que, sur la base de l'identificateur de pays déterminé, on met à disposition le tableau actuel et on l'exploite comme déterminant pour le fonctionnement du système de communication dans le pays d'installation déterminé.

2. Procédé selon la revendication 1,
**caractérisé par le fait qu**'un tableau (TB-K) est mémorisé pour la mise en oeuvre automatique de la procédure de numérotation, lequel tableau contient un indicatif d'occupation (BKZ-a à BKZ-x) autorisant une possibilité de communication internationale pour différents pays et l'indicatif de pays (LKZ-A à LKZ-X) à associer respectivement à un indicatif d'occupation de ce type, que les différentes combinaisons d'indicatifs plus un autre chiffre sont sélectionnées automatiquement les unes après les autres jusqu'à ce que, lors de la numérotation de la combinaison d'indicatifs représentant le pays d'installation, la libération, considérée comme critère de pays significatif, de l'occupation se produise et détermine ainsi le pays d'installation et que l'identificateur de pays correspondant puisse être_produit.

3. Procédé selon la revendication 2,
**caractérisé par le fait que**, comme données d'adressage pour les différents emplacements du tableau mémorisé, on exploite à chaque fois les combinaisons d'indicatifs associées.

4. Procédé selon la revendication 1,
**caractérisé par le fait que** le critère de pays significatif est déduit des informations transmises suite à une première communication vocale externe quelconque par le central de commutation public et sert à la formation de l'identificateur de pays.

5. Procédé selon la revendication 4,
**caractérisé par le fait que**, comme information transmise évaluable de cette manière, on utilise des éléments, spécifiques aux pays, des protocoles échangés entre le système de communication et le système de commutation public.

6. Procédé selon la revendication 4 ou 5,
**caractérisé par le fait qu**'on évalue des informations concernant la taxation comme critère de pays significatif et qu'on les exploite pour la formation de l'identificateur de pays.

7. Procédé selon la revendication 4 ou 5,
**caractérisé par le fait qu**'on utilise les messages spécifiques aux pays transmis en relation avec l'affichage sur terminal vidéo (DL) comme critère de pays significatif et qu'on les exploite pour la formation de l'identificateur de pays.

8. Procédé selon la revendication 1,
**caractérisé par le fait que**, à partir d'un tableau (TB1) contenant des informations normalisées et d'un tableau de modification (TB2 à TBx) prévu pour chaque pays d'installation et contenant à chaque fois simplement les modifïcations par rapport au tableau normalisé, le tableau actuel des paramètres de commande spécifiques aux pays est élaboré par la commande de système à l'aide d'un programme approprié.

9. Procédé selon la revendication 8,
**caractérisé par le fait que** le tableau contenant les informations normalisées est le tableau qui contient les paramètres de commande déterminants pour un certain pays.
